# EUROPEAN PATENT APPLICATION

(11) **EP 3 321 515 A1**
(43) Date of publication of application: **16.05.2018**
(21) Application number: 17198249.9
(22) Date of filing: 25.10.2017
(51) Int. Cl.: F15B 11/16

(54) **HYDRAULIC CYLINDER SUPPLY SYSTEM**

(30) Priority: 09.11.2016 GB 201618876
(71) Applicant: AGCO International GmbH, 8212 Neuhausen am Rheinfall (CH)
(72) Inventor: Reitemann, Gabriel, 87616 Marktoberdorf (DE)
(74) Representative: AGCO Intellectual Property Department

(57) **Abstract**

A hydraulic circuit provides relief pressure operation for a hydraulic cylinder (18) in an implement linkage of a utility vehicle. A relief pressure control valve (50) has a first position (50a) providing a connection between a variable displacement pump (30) and one side of the hydraulic cylinder (18), and a second position (50b) providing a connection between that side of the hydraulic cylinder and a drain or reservoir (32). A connection (54, 44) carries an indication of the pressure in the hydraulic cylinder chamber as a load-sensing signal to control adjustment of the pump (30).

## Description

The invention relates to a pressurised fluid supply system on an agricultural vehicle provided to supply hydraulic cylinders for example to move the lower links of a tractor three-point-linkage or the lifting unit for a header installed on a self-propelled harvesting machine.

Mobile fluid (hydraulic) supply systems are widely used to drive consumers on agricultural vehicles, such as tractors or a self-propelled harvesters, or on implements attached thereto. The term "control" in relation to supply systems hereby includes any adjustment of the supply system regarding direction, supply time or pressure of the fluid flow. These hydraulic systems are mostly provided with a pump, one or more consumers, control means and a tank to provide a fluid reservoir.

Referring to an agricultural tractor, a well-known form of consumer fixedly installed on this machinery is a hydraulic cylinder used to raise or lower a lower arm of a three-point linkage, which three-point linkage can be attached to the front or the rear of the vehicle. A similar system involving one or more cylinders is provided on a self-propelled harvesting machine, for example a forage harvester or a combine, and is used to lift or lower the harvesting header.

These hydraulic cylinders (also called lifting cylinders) conventionally comprise a cylinder body which is formed like a tube, with a cylinder base on one end and a cylinder piston moving within the cylinder body. The cylinder piston is fixed to a piston rod extending through a cylinder head for connection with parts to be moved. The cylinder piston, cylinder body and the cylinder base form a first chamber, also called the piston side (or piston side chamber). The cylinder piston, cylinder body and the cylinder head (through which the rod extends) form a second and opposite chamber, also called the ring side (or annulus side chamber).

Each chamber can be connected to a hydraulic supply system, either on the pressure generating pump side or the pressure discharging tank side, with a control system operating the cylinder in single-acting or double-acting mode.

In general a linkage control system is required to provide four modes:
1. A raising mode to lift the linkage
2. A lowering mode to lower the linkage
3. Floating position allowing free movement of the linkage
4. Locked/NEUTRAL position (typically for driving on the road)

Depending on the installation of the lifting cylinder, the raising mode may be provided by pressurizing the ring side of the lifting cylinder (which is common for a three-point linkage attached to the front) or by pressurizing the piston side (which is common for a rear three-point linkage).

A further desirable mode is a relief pressure mode. Relief pressure systems are provided to take part of the weight load of an attached implement that runs on the soil surface, whereby the implement can follow the ground contours but does not impact the soil too excessively. This is advantageous for certain types of mounted agricultural implement, especially for fully-mounted front mowers.

A relief pressure system basically works by adjusting a defined pressure on one side of a lifting cylinder (generally the side for lifting). This defined pressure results in a defined force in an upwards direction so that effective weight is taken from the implement and transferred to the tractor or other vehicle to which the implement is mounted. This provides an additional benefit in terms of improved traction and steering control.

In practice, the implement is laid down on a weighing machine (for trucks). A certain weight is shown. The operator can then adjust the pressure so that the weight shown on the weighing machine is decreased to a certain value. This has to be done once to get a reference which may then be corrected depending on current soil/harvest conditions.

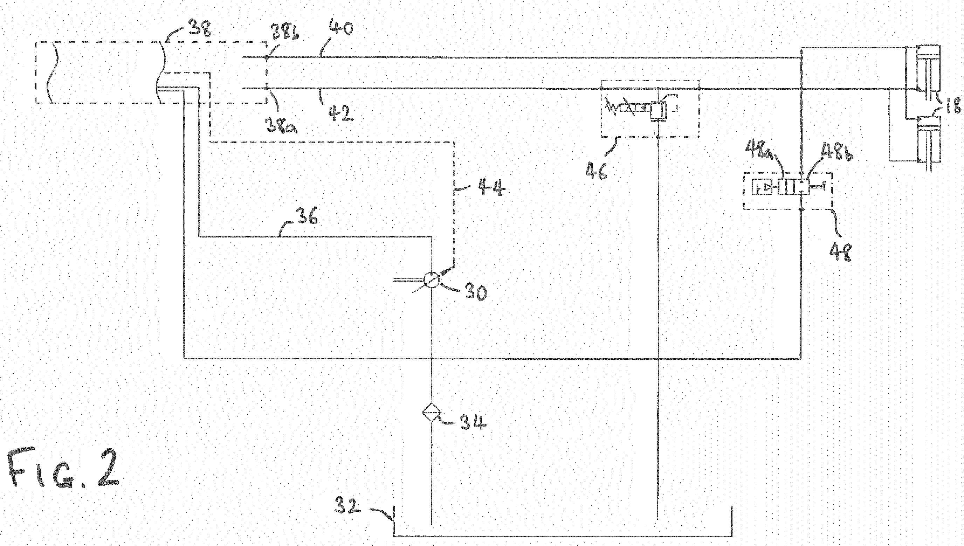

Such a relief pressure system is available on the Fendt™ 700 series of tractors produced by AGCO GmbH in Marktoberdorf, Germany. A hydraulic circuit for such a system is described below with reference to Figure 2 of the accompanying drawings.

A further desirable mode is a down pressure mode. Down pressure systems are provided to apply a downwardly directed force to an attached implement. This is advantageous for certain types of mounted agricultural implement, especially for front furrow packers which are slightly compacting soil before a rear mounted seeder lays the seeds.

Both modes, relief pressure mode and down pressure mode, work by adjusting a pressure on one side of a lifting cylinder so that term relief pressure mode or relief pressure is used for both modes throughout this patent application.

In accordance with a first aspect of the present invention there is provided a hydraulic circuit comprising:
a first hydraulic cylinder having a piston separating first and second side chambers;
a tank providing a fluid reservoir;
a variable displacement pump connected to draw fluid from the tank and having a mechanism to vary the pump displacement in response to a received load-sensing signal;
a linkage control valve coupled to receive pressurised fluid output from the pump and operable to output the same to one of the first hydraulic cylinder first and second side chambers via respective first and second supply lines, and further coupled to deliver a load-sensing signal to the pump;
a switch valve operable to couple the first hydraulic cylinder first side chamber to the tank; and
a relief pressure control valve having a first position providing a connection between the pump output and the first hydraulic cylinder second side chamber, and a second position providing a connection between the first hydraulic cylinder second side chamber and the tank, with a further connection carrying an indication of the pressure in the first hydraulic cylinder second side chamber as a load-sensing signal to the linkage control valve.

The present invention further provides a utility vehicle including such a hydraulic circuit.

Further features of the invention are recited in the attached sub-claims, to which reference should now be made.

Embodiments of the invention will now be described, by way of example only, and with reference to the accompanying drawings in which:
Figure 1 schematically represents a farm tractor with an implement mounted on a hydraulically adjustable front linkage;
Figure 2 is a hydraulic circuit diagram for a known relief pressure system for a hydraulically adjustable linkage;
Figure 3 is a hydraulic circuit diagram for a relief pressure system embodying the present invention;
Figure 4 schematically represents an agricultural harvester with a hydraulically adjustable header; and
Figures 5A and 5B are hydraulic circuit diagrams for further embodiments of relief pressure system.

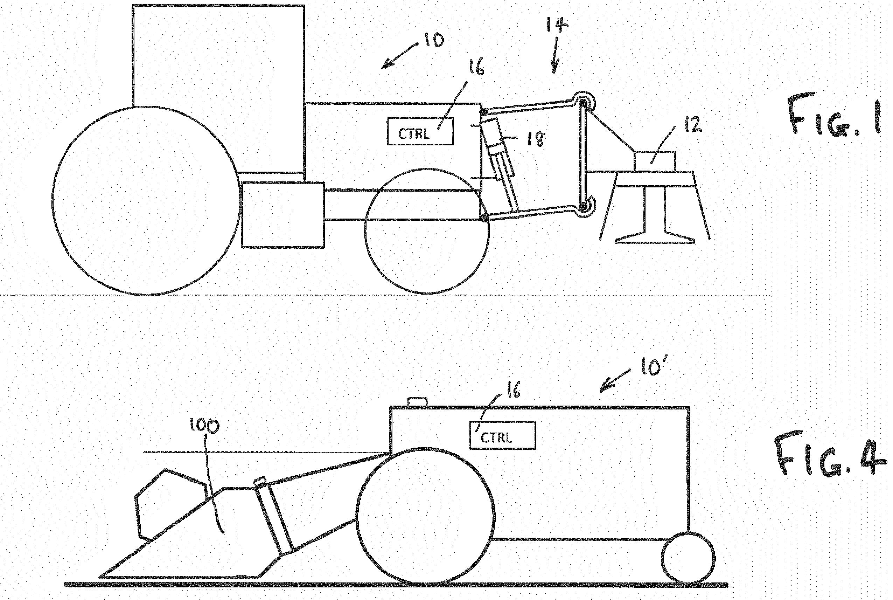

Figure 1 shows an agricultural vehicle 10 in the form of a farm tractor carrying and implement 12 (in this case a mower) by means of a front hitch 14. A hydraulic circuit 16 includes a hydraulic cylinder 18 controllably supplied with fluid to piston or ring side to provide the four modes (raising, lowering, floating, locked) described previously - also known as NORMAL operation. Where the front hitch14 is of conventional three-point linkage type, having a single upper link and a connected pair of lower links each pivotably attached to the vehicle 10, each of the lower links may be raised and lowered by respective ones of a pair of hydraulic cylinders 18. In such a case the two hydraulic cylinders are connected in parallel, that is to say the two piston side chambers are in fluid communication, as are the two ring side chambers.

For illustrative purposes, a known pressure relief system in a hydraulic supply system of a tractor is shown in Figure 2. A variable displacement pump 30 draws hydraulic fluid from a tank 32, which provides a fluid reservoir, suitably via a filter 34. The pressurised fluid output from the pump 30 is carried via a line 36 to a linkage control valve 38 having first and second ports 38a, 38b. In addition to controllably delivering fluid to the hydraulic cylinders 18 via lines 40 and 42 as shown, the linkage control valve 38 provides a fluid supply to other consumers (not shown) on or attached to the tractor.

The linkage control valve 38 may comprise or be part of a number of interconnected valve assemblies forming a valve manifold. Such a valve manifold can be designed without internal connecting pipes or hoses and is very flexible in terms of the configurations which may be achieved. An example of such a manifold is the SB23-EHS1 Load-Sensing Control Block produced by Bosch Rexroth AG of Schwieberdingen, Germany.

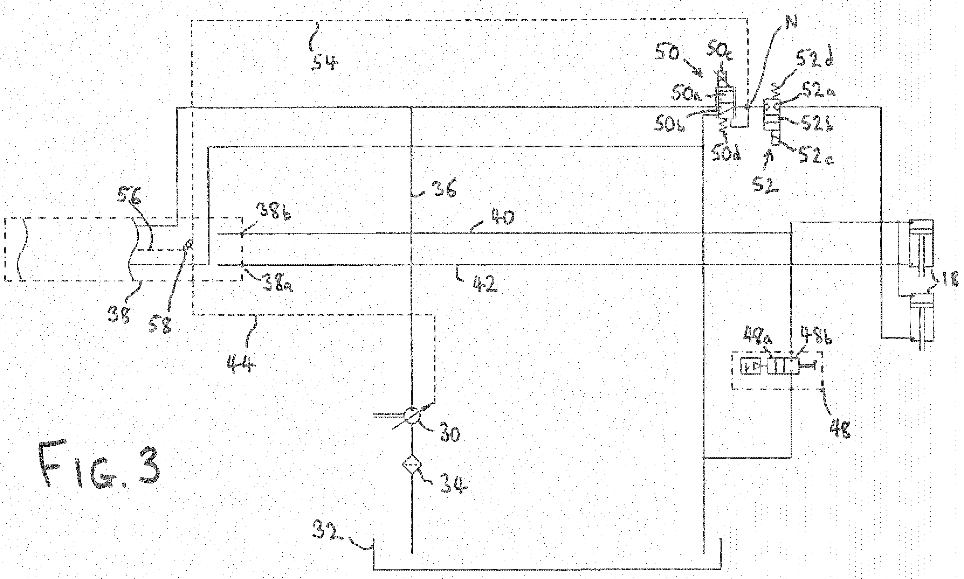

The linkage control valve 38 may provide several positions which generally match with the above described four modes of a linkage control system and influence the status of the first ports 38a and second port 38b (the internal connection of these ports to tank, pump or blockage) and the connected lifting cylinder(s) chambers (ring side and piston side). The mode may thereby changer depending on the installation of the lifting cylinder(s) so that the position/modes of linkage control valve 38 are described as an example with reference to Figures 2 and 3:
1. A raising mode to lift the linkage: Port 38a connected to pump 30, Port 38b connected to tank 32
2. A lowering mode to lower the linkage: Port 38b connected to pump 30, Port 38a connected to tank 32
3. Floating position allowing free movement of the linkage: Port 38a,38b connected to tank 32

With regard to the NEUTRAL position, linkage control valve 38 may offer two options:
4. Locked/NEUTRAL Double acting position (further referred to as NEUTRAL-DA): Port 38a and 38b blocked.
5. Locked/NEUTRAL Single acting position (further referred to as NEUTRAL-SA): Port 38a blocked, but Port 38b connected to tank 32, so that unintended lowering is prohibited but the implement can move upwards as fluid from the piston side of hydraulic cylinders 18 is discharged to the tank 32.

As already explained, depending on lifting cylinder installation and the assignment of the ports 38a, 38b to respective chambers of the lifting cylinder(s) the modes may provide different operation.

The linkage control valve 38 receives feedback providing indications of demand from the various connected consumers and outputs a load sensing (LS) signal on line 44 to the pump 30. The pump displacement is changed depending on the LS signal such as to meet the highest demand from any one of the consumers.

Generally the linkage control valve 38 is provided to adjust oil flow: a defined pressure level cannot be adjusted. Replacing the linkage control valve 38 by a pressure adjustable valve would negatively impact the basic function of the linkage needed for NORMAL operation, so relief pressure operation is always realized by an "add-on" valve arrangement.
- Between the line 42 (connecting the linkage control valve 38 to the ring side of the hydraulic cylinders 18) and the tank 34 is a relief pressure valve 46.
- Between the line 40 (connecting the linkage control valve 38 to the piston side of the hydraulic cylinders 18) and the tank 34 is a single-/double-acting switch valve 48. In a first position 48a, switch valve 48 connects line 40 to the tank 32. In a second position 48b (as shown), the connection from line 40 to tank 32 is open.

In relief pressure operation, firstly, the switch valve 48 is switched to single acting position 48a so that piston side of hydraulic cylinders 18 can discharge fluid to the tank 32. The linkage control valve 38 is then switched to raising mode, with the result that the linkage control valve 38 is constantly supplying fluid on line 42 to the ring side of hydraulic cylinders 18. The relief pressure valve 46 (between line 42 and the tank 32) can be adjusted to a certain pressure to set the desired weight relief. If this pressure is exceeded, the ring side is discharged to tank 30 via the relief pressure valve 46.

The necessity of single-/double-acting switch valve 48 depends on the specification of the linkage control valve 38. Generally when adjusting the pressure on one side of a hydraulic cylinder 18 by control of the fluid supply, the fluid in the opposite chamber must be discharged to tank. If the fluid discharge of the opposite chamber is blocked, the pressure adjustment would be prevented. So the necessity of single-/double-acting switch valve 48 depends on whether fluid of the opposite chamber can be discharged through linkage control valve 38 (internally in the valve manifold) or must be discharged external to the linkage control valve 38 which is then provided by single-/double-acting switch valve 48.

If the linkage control valve 38 is provided with the NEUTRAL Double acting position (NEUTRAL-DA) and this position is selected, switch valve 48 switched to single acting position 48a serves the purpose to discharge fluid from piston side of hydraulic cylinders 18 to the tank 32. If switch valve 48 is not be provided, fluid from the piston side of hydraulic cylinders 18 cannot be discharged to tank as port 38b is blocked in this position.

If linkage control valve 38 is provided with the NEUTRAL Singe acting position (NEUTRAL-SA) and this position is selected, fluid from piston side of hydraulic cylinders 18 is discharged to the tank 32 via port 38b.

This Figure 2 arrangement has major drawbacks. Firstly, the linkage control valve 38 constantly attempts to raise the implement and if the pressure at the relief pressure valve 46 is exceeded, the connection to tank is opened leading to the linkage control valve 38 constantly delivering a full amount of fluid which is then discharged to tank. The LS signal to the variable displacement pump 30 is not adjusted according to the needs in relief pressure operation. This results in inefficient operation.

Furthermore, if the implement 12 is lifted by external forces (for example the mower of Figure 1 encounters a bump in the ground), an under-pressure occurs in the ring chamber of the hydraulic cylinders 18. As the ring chamber is connected to tank 32 in relief pressure operation, fluid cannot be provided so that the implement lays on the ground with full weight.

Figure 3 illustrates a hydraulic supply system embodying the present invention. Those components common to the known system of Figure 2 are indicated by the same reference numerals and will not be again described.

Compared to the system of Figure 2, in Figure 3 the relief pressure valve 46 is omitted and instead a relief pressure control valve 50 and relief pressure switch valve 52 are provided. Considering a node N on a line between the control valve 50 and switch valve 52, in a first position 50a the control valve 50 connects N to the pump output on line 36, and in a second position 50b connects N to the tank 32. In a first position 52a the switch valve 52 is closed and in a second position 52b the switch valve 52 connects N to the ring chambers of the hydraulic cylinders 18. The relief pressure control valve 50 is switched to position 50a by a solenoid 50c opposed by both a spring 50d and the pressure at N. The switch valve 52 is also operated by a solenoid 52c against a spring 52d, which spring 52d urges the valve to the closed position 52a.

The pressure at the node N is fed back on line 54 as an LS signal to the linkage control valve 38. Within the control valve 38, a further LS line 56 carries a further LS signal from one or more connected consumers. A shuttle valve 58 within the control valve 38 ensures that the highest load sensing signal is forwarded on line 44 for adjustment of the pump 30.

The linkage control valve 38 provides the same functionality as in the Fig. 2 embodiment. In NORMAL operation, relief pressure control valve 50 and relief pressure switch valve 52 are in the positions shown (50b, 52a) so that node N and the LS line 54 are always connected to tank 32. By that, only the LS signal on line 58 coming from other consumers coupled to the linkage control valve 38 is forwarded to adjust pump pressure during NORMAL operation.

For relief pressure operation, firstly, linkage control valve 38 is switched to one of the NEUTRAL modes, NEUTRAL-DA or NEUTRAL-SA. Similar to the system illustrated in Figure 2, if the linkage control valve 38 is provided with the NEUTRAL Double acting position (NEUTRAL-DA) and this position is selected, switch valve 48 must be provided to discharge fluid from piston side of hydraulic cylinders 18 to the tank 32. Therefore, the single-/double-acting switch valve 48 is switched to single acting position 48a as with the Fig.2 solution.

If linkage control valve 38 is provided with the NEUTRAL Single acting position (NEUTRAL-SA) and this position is selected, fluid from piston side of hydraulic cylinders 18 is discharged to the tank 32 via port 38b so that switch valve 48 can be omitted.

Next, the relief pressure switch valve 52 is opened (position 52b) to connect the ring chambers of hydraulic cylinders 18 to node N and hence to relief pressure control valve 50. The relief pressure control valve 50 can then adjust the pressure on the ring side of the linkage cylinders 18 (in position 50a). The solenoid 50c of relief pressure control valve 50 acts against the spring 50d (typical setting 5 bar) and the ring side pressure from N. If the adjusted pressure is reached relief pressure control valve 50 opens to tank 32 (position 50b).

The load pressure (on the ring side of cylinders 18 and at node N) is forwarded to the LS line 54 to adjust pump 30. Suitably the default pressure differential of the load sensing pump 30 is set to 20 bar (the pump always supplies a pressure +20 bar compared to the request via LS line 44), and the same pressure difference is provided at relief pressure control valve 50 making the system very responsive.

This arrangement provides some major advantages compared to current solution, the first of which is that there is no constant oil flow discharged to tank for relief pressure operation. The pressure setting for relief pressure control valve 50 is forwarded to LS branch 54, 44 for pump adjustment giving LS control in relief pressure operation. Furthermore, as before, if the implement is lifted by external forces (e.g. a bump), an under-pressure occurs in the ring chamber of the hydraulic cylinders 18. However, as the ring side pressure falls, relief pressure control valve 50 is moved to position 50a for connection to pump receiving oil flow on line 36 so that pressure setting can be reached again. Even if, in that case, the LS line does not forward any pressure to control the pump 30, the default pressure differential of the pump (20 bar) ensures that the relief pressure is rising again (resulting in LS signal generation).

Although the foregoing embodiment is a front hitch arrangement for a tractor, it will be recognised that the present invention is not so limited. Especially the installation of the lifting cylinder in the vehicle can vary so that ring side or piston side must be pressurized to e.g. provide the raising mode to lift the linkage.

In addition to being applicable to tractor rear hitch arrangements, it may also be applied as shown in Figure 4 to an agricultural vehicle 10' in the form of an agricultural harvester of the type having one or more ground-engaging support wheels (not shown) supporting the weight of a harvesting header 100.

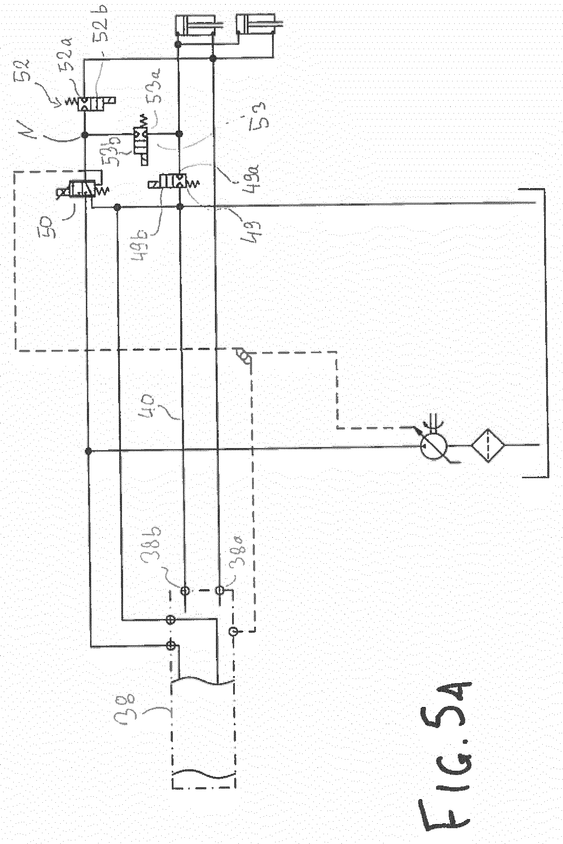

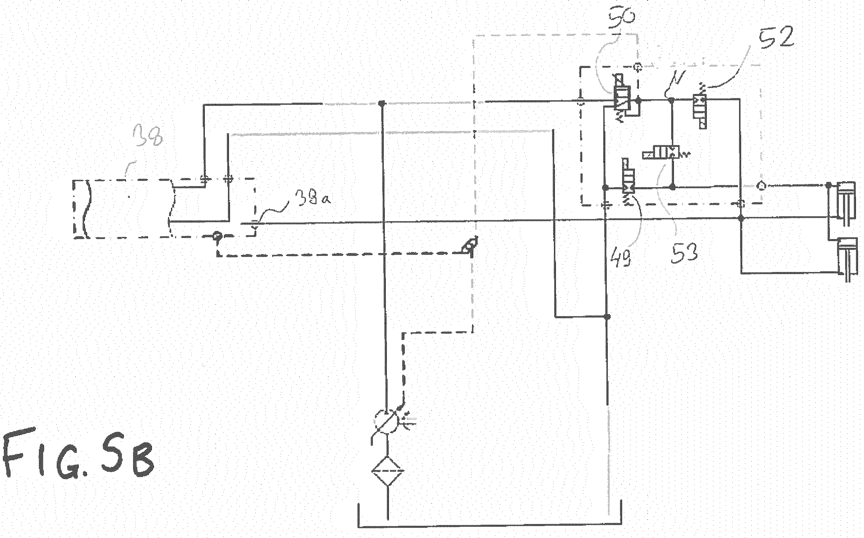

The foregoing embodiments describe a solution for providing a relief pressure control (which means that the force applied is directed upwards). Turning now to Figures 5A and 5B, it is envisaged that a down pressure system may be provided by providing the same valve arrangement in the branch of the other chamber of hydraulic cylinder 18.

If there is the additional need for a relief pressure (=down pressure) control for the piston chamber of the hydraulic cylinder 18, additional down pressure switch valve 53 (which works in exactly the same way as relief pressure switch valve 52) and further switch valve 49 (which works exactly the same way as single-/double-acting switch valve 48) is provided. This arrangement of Figure 5A may be used to provide down pressure to operate e.g. a front furrow packer.

If the system is operating in the relief pressure mode wherein ring side pressure is adjustable, relief pressure switch valve 52 is switched to opened position (position 52b) to connect the ring chambers of hydraulic cylinders 18 to node N and hence to relief pressure control valve 50. The relief pressure control valve 50 is then provided to adjust the pressure on the ring side of the hydraulic cylinders 18 (in position 50a). This is the same as explained with reference to Figure 3. In addition, down pressure switch valve 53 would be kept in closed position 53a to avoid that fluid from piston chamber would be discharged towards node N causing a hydraulic short circuit. Additionally, further switch valve 49 is in opened position 49a to discharge fluid from piston chamber to tank 32. In this relief pressure control mode, linkage control valve 38 would be switched to NEUTRAL-DA or NEUTRAL-SA wherein Port 38a is blocked (to avoid discharge of piston side). The status of port 38b can be blocked or connected to tank 32.

If the system is operating in the down pressure mode wherein piston side pressure is adjustable, relief pressure switch valve 52 would be switched to closed position (position 52a). Furthermore linkage control valve 38 would be switched to Floating position wherein Ports 38a, 38b are both connected to tank 32. In addition, down pressure switch valve 53 would be switched to opened position 53b to connect the piston side to node N and hence to relief pressure control valve 50. In parallel, switch valve 49 is switched in closed position 49b to avoid fluid discharge from piston chamber to tank 32 The relief pressure control valve 50 can then adjust the pressure on the piston side of the hydraulic cylinders 18 (in position 50a).

Regarding Figure 5B, this is a further embodiment just differing in that the linkage control valve 38 is now single acting so that port 38b is not connectable to hydraulic cylinder 18. As a consequence line 40 is not necessary. In terms of functionality regarding valve 28 and the necessity of valve 49, there is no difference. For relief pressure control, linkage control valve 38 must be in NEUTRAL position so that port 38a is blocked. For down pressure mode linkage control valve 38 must be in floating position.

In the foregoing the applicants have described a hydraulic circuit that provides relief pressure operation for a hydraulic cylinder 18 in an implement linkage of a utility vehicle. A relief pressure control valve 50 has a first position 50a providing a connection between a variable displacement pump 30 and one side of the hydraulic cylinder 18, and a second position 50b providing a connection between that side of the hydraulic cylinder and a drain or reservoir 32. A connection 54, 44 carries an indication of the pressure in the hydraulic cylinder chamber as a load-sensing signal to control adjustment of the pump 30.

From reading the present disclosure, other modifications will be apparent to persons skilled in the art. Such modifications may involve other features which are already known in the field of agricultural machines and component parts thereof and which may be used instead of or in addition to features already described herein, and the scope of the invention is limited only by the following claims.

## Claims

1. A hydraulic circuit comprising:
a first hydraulic cylinder having a piston separating first and second side chambers;
a tank providing a fluid reservoir;
a variable displacement pump connected to draw fluid from the tank and having a mechanism to vary the pump displacement in response to a received load-sensing signal;
a linkage control valve (38) coupled to receive pressurised fluid output from the pump and operable to output the same to one of the first hydraulic cylinder first and second side chambers via respective first and second supply lines, and further coupled to deliver a load-sensing signal to the pump;
at least one switch valve (48, 49) operable to couple the first hydraulic cylinder first side chamber to the tank; and
a relief pressure control valve (50) having a first position providing a connection between the pump output and the first hydraulic cylinder second side chamber, and a second position providing a connection between the first hydraulic cylinder second side chamber and the tank, with a further connection carrying an indication of the pressure in the first hydraulic cylinder second side chamber as a load-sensing signal to the variable displacement pump.

2. A hydraulic circuit as claimed in claim 1, wherein the relief pressure control valve is urged to the second position by a spring together with the fluid pressure in the first hydraulic cylinder second side chamber, and switched to the first position by a solenoid.

3. A hydraulic circuit as claimed in claim 1 or claim 2, wherein the variable displacement pump mechanism is arranged to cause the pump outflow pressure to exceed the load-sensing signal by a predetermined amount.

4. A hydraulic circuit as claimed in any preceding claim, further comprising a relief pressure switch valve (52,53) operable to open and close the connection between the relief pressure control valve and the first hydraulic cylinder second side chamber.

5. A hydraulic circuit as claimed in any preceding claim, further comprising a second hydraulic cylinder having first and second side chambers respectively in fluid communication with the first and second side chambers of the first hydraulic cylinder.

6. A hydraulic circuit as claimed in any preceding claim, wherein the further connection carries the load sensing signal to the pump via the linkage control valve.

7. A utility vehicle including a hydraulic circuit as claimed in any of claims 1 to 6, together with a pivotably attached component raised and lowered by operation of the first hydraulic cylinder.

8. A utility vehicle as claimed in claim 7, wherein the vehicle is an agricultural tractor and the pivotably attached component is an implement hitch.

9. A utility vehicle as claimed in claim 7, wherein the vehicle is an agricultural harvester and the pivotably attached component is a harvesting header.
